# EUROPEAN PATENT SPECIFICATION

(11) **EP 3 656 829 B1**
(45) Date of publication and mention of the grant of the patent: **15.12.2021**
(21) Application number: 19211069.0
(22) Date of filing: 22.11.2019
(51) Int. Cl.: C09J 7/20, C09J 7/38

(54) **SHEET MATERIAL**
BLATTMATERIAL
MATÉRIAU EN FEUILLE

(30) Priority: 26.11.2018 GB 201819171
(43) Date of publication of application: 27.05.2020
(73) Proprietor: Composites Evolution Limited, Chesterfield Derbyshire S41 9QG (GB)
(72) Inventor: CLOSE, Romilly Francesca, Bridge Way Chesterfield S41 9QG (GB); FOSTER, Gary Marc, Bridge Way Chesterfield S41 9QG (GB); WEAGER, Brendon Michael, Bridge Way Chesterfield S41 9QG (GB)
(74) Representative: HGF

(56) References cited:
- EP-A2- 0 117 026
- WO-A1-2015/084720

## Description

This invention relates generally to a sheet material, a method of manufacturing a sheet material and use of a sheet material for repairing, reinforcing and/or forming at least a portion of a structure or surface.

It is known to use sheet materials to repair or reinforce pre-existing structures or surfaces, for example where such structures or surfaces have become damaged or otherwise relatively weak or weakened. One commonly known type of sheet material for repair or reinforcement is known as duct tape, which is typically formed from a scrim of fibrous material with a polymeric coating on a first major surface and an adhesive on its second, obverse, major surface. Duct tape is typically thin and conformable and is generally provided wound about a roll. Additionally, duct tape is designed to be suitable to be torn across its width by the hands of a user. Accordingly, the tensile strength of duct tape is typically relatively low, for example less than 25 MPa, e.g. 21 or 22 MPa. This type of sheet material is, therefore, unsuited to form, repair or reinforce structures requiring relatively high tensile strength.

It is therefore a first non-exclusive object of the invention to provide a sheet material, a method of forming a sheet material and a use of a sheet material which mitigates one or more of the above-identified problems. It is also a non-exclusive object of the invention to provide a sheet material, a method of forming a sheet material and a use of a sheet material which is improved over prior art sheet material, methods of forming sheet material and uses of sheet material. It is a further non-exclusive object of the invention to provide a sheet material which is relatively less expansive to transport and/or store. It is a further non-exclusive object of the invention to provide a sheet material which is suitable for forming, repairing and/or reinforcing structures which require a relatively high tensile strength, e.g. a tensile strength greater than 25 MPa, for example higher than 30 MPa.

Accordingly, a first aspect of the invention provides a sheet material according to Claim 1.

Advantageously, sheet material according to the invention is relatively conformable to repair, reinforce and/or form contoured surfaces. Without wishing to be bound by any particular theory it is believed that the relatively thin shape of the sheet material allows relatively increased conformity to contoured surfaces than is possible with prior art structural sheet materials. Retaining plural fibres within the polymeric matrix, meanwhile, is believed to produce relatively enhanced tensile strength to the sheet material than is provided by prior art repair and reinforcement tapes such as duct tape. Surprisingly, we have found that retention of the plural fibres in the polymeric matrix does not adversely impact the conformability of the sheet material such that it is still capable of conforming to contoured surfaces.

A sheet material for securement at a site of use is described, the sheet material comprising a substrate layer having first and second major surfaces, with an adhesive located on the first major surface, the substrate layer being formed from plural fibres retained in a polymeric matrix, wherein the sheet material has a thickness of less than 0.50 mm and preferably more than 0.05mm.

A tape comprising a sheet material as stated above is described. The tape may comprise a substrate layer and an adhesive layer, the substrate layer being formed from fibres retained in a polymeric matrix wherein the fibre weight fraction is 25-75 w/w%, the adhesive layer comprising a pressure or moisture sensitive adhesive and wherein the tape is from 10 mm - 300 mm wide and has a thickness of less than or equal to 0.5 mm.

Advantageously, a weight fraction of 25-75 w/w%, or 40 to 70 w/w%, of fibres coupled with a thickness of less than or equal to 0.5mm provides a suitable flexibility and/or conformability as well as a relatively high tensile strength.

In some embodiments, the sheet material may have a thickness of less than 0.35, 0.30, 0.25 or 0.2 mm. In embodiments, the sheet material may have a thickness greater than 0.06, 0.07, 0.08, 0.09, 0.1 mm.

In some embodiments, the plural fibres may comprise between 25 and 75 w/w% of the substrate layer, for example between 25, 30, 35 or 40 and 75, 70, 65, 60 or 55 w/w%. In embodiments, the plural fibres may comprise between 20 and 70 v/v% of the substrate layer, for example between 20, 25, 30 or 35 and 70, 65, 60, 55, 50 or 45 v/v% of the substrate layer. For example, the plural fibres may comprise say 26-75 w/w%, 27-74 or 75 w/w %, 27 to 73, 74, 75 w/w%, 28 to 72, 73, 74, 75 w/w% e.g. 29 or 30-72 w/w %.

In some embodiments, the substrate layer may have a filament density of between about 1,000 and 20,000 fibres per mm², for example between about 2,000, 3,000 or 4,000 and about 20,000, 15,000 or 10,000 fibres per mm².

The plural fibres are substantially coaligned, e.g. axially. In embodiments, the sheet material may have a major surface with an aspect ratio of greater than 1. In embodiments in which the major surface has an aspect ratio of greater than 1, the major surface has a width and a length. The length of the major surface may have a principal direction. In embodiments, the plural fibres extend substantially parallel to the principal direction of the length of the major surface of the sheet material.

In embodiments, the sheet material has a length and the coaligned plural fibres extend in the direction of the length of the sheet material.

In some embodiments, the sheet material may have a tensile strength of greater than 25 MPa, for example greater than 30, 40, 50, 100, 200, 300, 400, 500, 600, 700, 800, 900, 1000, 1100, 1200, 1300, 1400, or 1500 MPa. In embodiments comprising carbon fibres, the sheet material may have a tensile strength of up to 1500 MPa, or higher than 1500 MPa.

In embodiments, the sheet material may be in the form of a tape.

In some embodiments, the sheet material may have a bend radius of less than or equal to 100 mm, say less than or equal to 90, 80, 70, 60, 50 or 40 mm. As used herein the phrase "bend radius" should be taken to mean the minimum radius to which the sheet material may be bent without kinking or otherwise damaging the sheet material.

In embodiments, the sheet material may have a tensile modulus of greater than 20 GPa, for example greater than 30, 40, 50, 60, 70, 80, 90 or 100 GPa. In embodiments comprising carbon fibres, the sheet material may have a tensile modulus of up to 100 GPa or higher than 100 GPa.

In some embodiments, the sheet material may have a width of between 10 mm and 300 mm, for example between 10 and 250, 200, 150, 100 or 50 mm. In embodiments, the sheet material may have a width of less than or equal to 100, 90, 80, 70, 60, 50 or 40 mm.

In embodiments, the fibres may comprise one or more of carbon fibres, glass fibres, and metallic fibres.

In embodiments comprising more than one type of fibre, the more than one type of fibres may comprise comingled fibres.

In some embodiments, the polymeric matrix may comprise a polymeric material comprising or consisting of a thermoplastic polymer and/or a thermosetting polymer. For example, the polymer matrix may comprise a polyamide (*e*.*g*. such as nylon 6, nylon 66, *etc*.), a polyolefin (*e*.*g*. such as polypropylene, polyethylene, *etc*.), an acrylic, acrylonitrile butadiene styrene, polylactic acid, polybenzimidazole, polycarbonate, polyether sulfone, polyoxymethylene, polyether ether ketone, polyetherimide, polyphenylene oxide, polyphenylene sulphide, polystyrene, polyvinyl chloride or the like. For example, the polymer matrix may comprise a polyester resin, a polyurethane, a polyurea, vulcanized rubber, a phenol formaldehyde resin, e.g. Bakelite (RTM); and/or a phenol resin, e.g. Duroplast (RTM); and/or a urea-formaldehyde, melamine resin, diallyl-phthalate, epoxy resin, epoxy novalac, benzoxazines, polyimides, a cyanate ester, a furan resin, a silicone resin, thiolyte, a vinyl ester or the like.

In embodiments, the adhesive may comprise a pressure sensitive and/or moisture and/or temperature sensitive adhesive. The adhesive may comprise a substrate-compatible adhesive known to the skilled person. The adhesive may comprise an acrylic-based adhesive, e.g. a pressure sensitive acrylic-based adhesive. The adhesive may comprise a rubber-based adhesive. The adhesive may coat or cover a major portion of the first major surface. In embodiments, the adhesive may coat or cover substantially all (e.g. all) of the first major surface. The adhesive may be an adhesive layer. The adhesive e.g. adhesive layer, may be located on the surface of the substrate. In some embodiments, the adhesive may be inboard of one or more edges of the substrate layer. The first major surface of the sheet material may have first and second edges, for example which may be substantially parallel to one another. The adhesive may be located inboard of the first and/or the second edge. The distance between the first and second edges may comprise a or the width of the sheet material. The adhesive may be provided along the length (where provided) of the sheet material, e.g. continuously or in interrupted manner.

In some embodiments, the sheet material may comprise a release layer, for example covering the adhesive. The release layer may be releasably (e.g. easily and/or by hand) attached to the adhesive. The release layer may comprise paper and/or a plastics material.

A sheet material as described herein stored about a roll is also described, for example having a diameter (e.g. maximum diameter) of less than 200mm, for example less than 150 mm, say less than 140, 130, 120, 110, 100, 90, 80, 70, 60 or 50 mm.

The sheet material may have a width of 30, 40 or 50 or 100mm to 300, 400, 500, 600, 700, 800, 900, 1000 mm. The sheet material may have a length of above 1 m, for example above 2m, 3m, 4m, 5m, 6m, 7m, 8m, 9m, 10m, 15m, 20m, 25m.

In an embodiment the sheet material may be a tape and may be 50mm wide and 10m long.

A further aspect of the invention provides a method of forming a sheet material, the method comprising the steps of:
a) providing substantially coaligned plural fibres;
b) providing a polymeric material;
c) at least partially impregnating the plural fibres with the polymeric material to thereby form a substrate layer comprising the plural fibres retained in a polymeric matrix, the polymeric matrix being formed from the polymeric material, the substrate layer having first and second major surfaces; and
d) applying an adhesive to the first major surface of the substrate layer, thereby providing a sheet material having a thickness of less than 0.40 mm.

Step a) may comprise drawing (e.g. pulling or running) the plural fibres through an apparatus for impregnating the plural fibres.

Step c) may comprise melt impregnation (e.g. pultrusion) of the plural fibres with the polymeric material. Step c) may comprise passing or running the plural fibres through the liquid or semi-liquid polymeric material. The liquid or semi-liquid polymeric material may be stored or retained in an impregnation chamber.

In some embodiments, the polymeric material may be provided in the form of a liquid, a resin, a powder and/or a solid in step b). Where the polymeric material is provided in the form of a resin, a powder and/or a solid in step b), step c) may comprise at least partially forming the polymeric material into a liquid or semi-liquid. At least partially forming the polymeric material into a liquid or semi-liquid may comprise heating the polymeric material. At least partially forming the polymeric material into a liquid or semi-liquid may comprise extruding or compressing the polymeric material.

In embodiments, the method may comprise adding a suitable curing agent, e.g. an initiator, and/or a photoinitiator, to the polymeric material to form the polymeric matrix. The method may comprise initiating an initiator, e.g. a photoinitiator, for example, by providing a source of light, e.g. UV light.

In embodiments, step c) may comprise solidifying the liquid or semi-liquid polymeric material, for example to form the substrate layer. Solidifying the liquid or semi-liquid polymeric material may comprise cooling (e.g. actively) the liquid or semi-liquid polymeric material. The cooling may comprise active and/or passive cooling. Active cooling may, in embodiments, comprise directing a relatively cool fluid (e.g. a gas such as air) at or toward the liquid or semi-liquid polymeric material. The cooling may comprise active and/or passive cooling.

In embodiments, step c) may comprise forming the substrate layer such that the plural fibres comprise between 25 and 75 w/w% of the substrate layer, for example between 25, 30, 35 or 40 and 75, 70, 65, 60 or 55 w/w%. In embodiments, step c) may comprise forming the substrate layer such that the plural fibres comprise between 20 and 70 v/v% of the substrate layer, for example between 20, 25, 30 or 35 and 70, 65, 60, 55, 50 or 45 v/v% of the substrate layer.

In some embodiments, step c) may comprise a melt impregnation process, e.g. a continuous melt impregnation process. Step c) may comprise running or passing the plural fibres through the polymeric material (for example in a liquid state). Step c) may comprise at least partially spreading the plural fibres, e.g. prior to or concurrent with impregnation with the polymeric material.

The method may comprise a step f) of applying a release layer to cover the adhesive. The release layer may be fed from a roll (for example about which it may be stored prior to application to cover the adhesive).

The method may comprise a step g) of collecting the sheet material, e.g. about a roll (for example for transport and/or storage). In embodiments, the roll may have a diameter of less than 200, 180, 160, 150, 140, 130, 120, 110, 100, 90, 80, 70, 60, 50 or 40 mm.

In some embodiments, the method may comprise a step h) of cutting the sheet material, e.g. to desired dimension or dimensions and/or shape. Step h) may occur prior to step g) (where undertaken) and/or step f) (where undertaken) and/or step d).

A further aspect of the invention provides use of a sheet material as described herein and/or as formed by a method as described herein. The use may be for repairing, reinforcing and/or forming at least a portion of a structure or surface (for example by providing at least part of a layer of a structure or surface). Forming at least a portion of a structure or surface may comprise forming a composite laminate. The formed structure may comprise a manufacturing or structural component.

The method of use may comprise unrolling at least a portion of the sheet material from about a roll, for example having a diameter of less than 200, 180, 160, 150, 140, 130, 120, 110, 100, 90, 80, 70, 60, 50 or 40 mm. The method of use may comprise then repairing, reinforcing and/or forming the at least a portion of the structure or surface using some or all of the unrolled at least a portion of the sheet material.

For the avoidance of doubt, any of the features described herein apply equally to any aspect of the invention.

Within the scope of this application it is expressly envisaged that the various aspects, embodiments, examples and alternatives set out in the preceding paragraphs, in the claims and/or in the following description and drawings, and in particular the individual features thereof, may be taken independently or in any combination. Features described in connection with one aspect or embodiment of the invention are applicable to all aspects or embodiments, unless such features are incompatible.

Embodiments of the invention will now be described by way of example only with reference to the accompanying drawings in which:
Figure 1 is a schematic perspective view of a sheet material according to an embodiment of the invention;
Figure 2 is a schematic cross-sectional view of the sheet material shown in Figure 1 along the line A-A;
Figure 3 is a flow diagram showing a method of forming a sheet material according to an embodiment of the invention;
Figure 4 is a schematic cross-sectional view of a sheet material according to a further embodiment of the invention; and
Figure 5 is a schematic side view of a sheet material according to an embodiment of the invention wrapped about a roll.

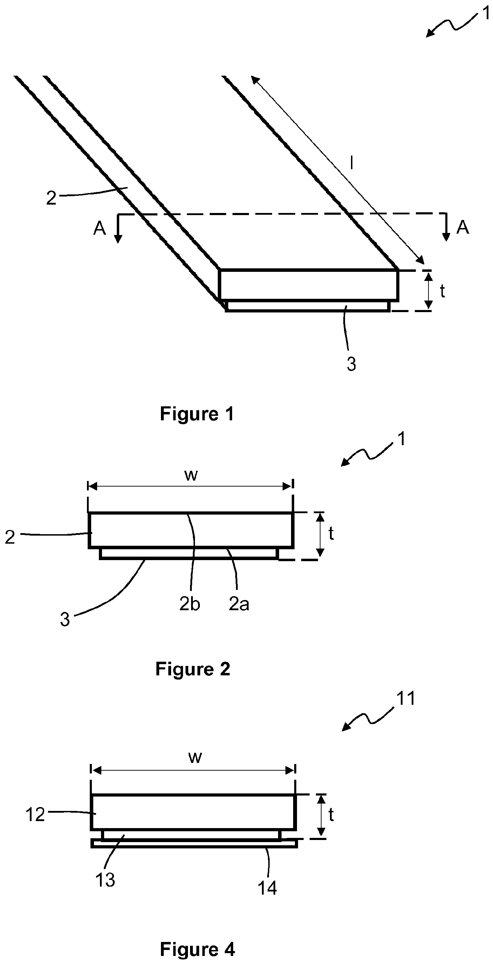

Referring now to Figures 1 and 2, there is shown a sheet material 1 according to an embodiment of the invention. The sheet material 1 comprises a substrate layer 2 comprising first and second major surfaces 2a, 2b. An adhesive 3 is on the first major surface 2a of the substrate layer 2.

The sheet material 1 is in the form of a tape, in this embodiment. The sheet material 1 has a length I, a width w and a thickness t, in this embodiment.

The sheet material 1 has a thickness t of less than 0.5 mm in this embodiment. In embodiments, however, the sheet material 1 may have a thickness of less than 0.40, 0.35, 0.30, 0.25 or 0.2 mm. In embodiments, the sheet material may have a thickness greater than 0.1 mm.

In this embodiment, the sheet material 1 has a width of approximately 30 mm. In embodiments, however, the sheet material 1 may have a width of between 10 mm and 300 mm, for example between 10 and 250, 200, 150, 100 or 50 mm. In embodiments, the sheet material may have a width of less than or equal to 100, 90, 80, 70, 60, 50 or 40 mm.

The sheet material 1 may have a length I of greater dimension than is the width w or thickness t. For example, in embodiments, the length I of the sheet material 1 may be greater than 300, 400, 500, 600, 700, 800, 900 or 1000 mm. In embodiments the length I of the sheet material 1 may be greater than 1500, 2000, 2500 or 3000 mm.

The substrate layer 2 comprises plural fibres retained in a polymeric matrix. The plural fibres comprise between 25 and 75 w/w% of the substrate layer 2, for example between 25, 30, 35 or 40 and 75, 70, 65, 60 or 55 w/w%. In embodiments, the plural fibres may comprise between 20 and 70 v/v% of the substrate layer 2, for example between 20, 25, 30 or 35 and 70, 65, 60, 55, 50 or 45 v/v% of the substrate layer 2.

The plural fibres are substantially axially coaligned such that the plural fibres extend in substantially the direction of the length I of the substrate material 2.
The plural fibres comprise carbon fibres, in this embodiment. In embodiments, however, the plural fibres may additionally or alternatively comprise glass fibres, and/or metallic fibres, and/or comingled fibres.

The polymeric matrix comprises a thermoplastic polymer which is a polyamide (e.g. such as nylon 6, nylon 66, etc.), in this embodiment. In embodiments, however, the polymeric matrix may comprise a thermoplastic polymer which is a polyolefin (e.g. such as polypropylene, polyethylene, *etc*.), an acrylic, acrylonitrile butadiene styrene, polylactic acid, polybenzimidazole, polycarbonate, polyether sulfone, polyoxymethylene, polyether ether ketone, polyetherimide, polyphenylene oxide, polyphenylene sulphide, polystyrene, polyvinyl chloride or the like. Additionally or alternatively, in embodiments, the polymeric matrix may comprise a thermosetting polymer such as a polyester resin, a polyurethane, a polyurea, vulcanized rubber, Bakelite (RTM), Duroplast (RTM), urea-formaldehyde, melamine resin, diallyl-phthalate, epoxy resin, epoxy novalac, benzocazines, polyimides, a cyanate ester, a furan resin, a silicone resin, thiolyte, a vinyl ester or the like.

The adhesive 3 is provided in a layer of adhesive, in this embodiment. In embodiments, however, the adhesive 3 may be provided in any suitable form (for example in one or more discrete locations on the first surface 2a of the substrate layer 2. The adhesive 3 thickness may be constant or may vary, for example across the width and/or along the length of the substrate layer 2. The adhesive 3 is inboard of both edges of the substrate layer, in this embodiment. In embodiments, however, the adhesive may be inboard of only one of the edges or of neither of the edges. The adhesive 3 is an acrylic-based adhesive, e.g. a pressure sensitive acrylic-based adhesive, in this embodiment, that is pressure sensitive, e.g. 300LSE(RTM) adhesive by 3M(RTM) (3M Industrial Adhesives and Tapes Division, 3M Center, St. Paul, MN 55144-1000). In embodiments, however, the adhesive may, additionally or alternatively comprise a different material and/or may be temperature and/or moisture sensitive.

In use, the sheet material 1 is secured at or to a site of use using the adhesive 3. For example, the use may be for repairing, reinforcing and/or forming at least a portion of a structure or surface (for example by providing at least part of a layer of a structure or surface).

### Example

A sheet material 2 according to an Example of the invention was prepared, wherein the sheet material 2 had a thickness t of 0.3 mm and a width w of 30 mm. The substrate layer 2 was formed of carbon fibres retained in a polymeric matrix formed from the polymeric material polyamide 6 (Nylon 6). The specific grade used was Radilon (RTM) BN200 from RadiciGroup (Gandino, Italy). The carbon fibres comprised about 40 w/w% of the substrate layer 2. Approximately 60,000 coaligned carbon fibres were provided in the substrate layer 2, extending along the direction of the length I of the sheet material 2. Accordingly, the substrate layer 2 had a filament density of approximately 6,500 fibres per mm². The adhesive 3 comprised a pressure-sensitive adhesive transfer tape comprising an acrylic adhesive. The specific adhesive used was 300LSE(RTM) by 3M (RTM) (3M Industrial Adhesives and Tapes Division, 3M Center, St. Paul, MN 55144-1000), which is a double-sided pressure sensitive transfer tape.

### Test results

The tensile modulus of sheet material 1 according to the above-described Example was tested using a common test technique well known to the skilled person, which will not be described herein. The sheet material 1 according to the Example was found to provide a tensile modulus of approximately 70 GPa.

The tensile strength of sheet material 1 according to the above-described Example was also tested according to a commonly known technique well known to the skilled person, which will not be described herein. The sheet material 1 according to the Example was found to provide a tensile strength of approximately 1,100 MPa.

Additionally, sheet material 1 according to the above-described Example was wound about a roll having a diameter of 80 mm. The sheet material 1 according to the Example was found to closely conform to the shape of the roll and to not be kinked or otherwise damaged by being wound thereabout. Accordingly, the sheet material 1 according to the Example was determined to have a bend radius of less than or equal to 40 mm.

Beneficially, with a tensile strength of approximately 1,100 MPa and a bend radius of less than or equal to 40 mm the sheet material 1 according to the above-described Example is strong (for example relative to duct tape) whilst also being conformable (for example relative to prior art structural sheet material). Accordingly, sheet material 1 according to the invention is useful for repairing, reinforcing and/or forming a structure or surface such that the so repaired, reinforced or formed structure or surface is relatively strong and/or resistant to deformation. Additionally, relatively non-flat surfaces or structures may be repaired, reinforced or formed using the sheet material 1 according to the invention, thereby increasing the relative usefulness of the sheet material 1.

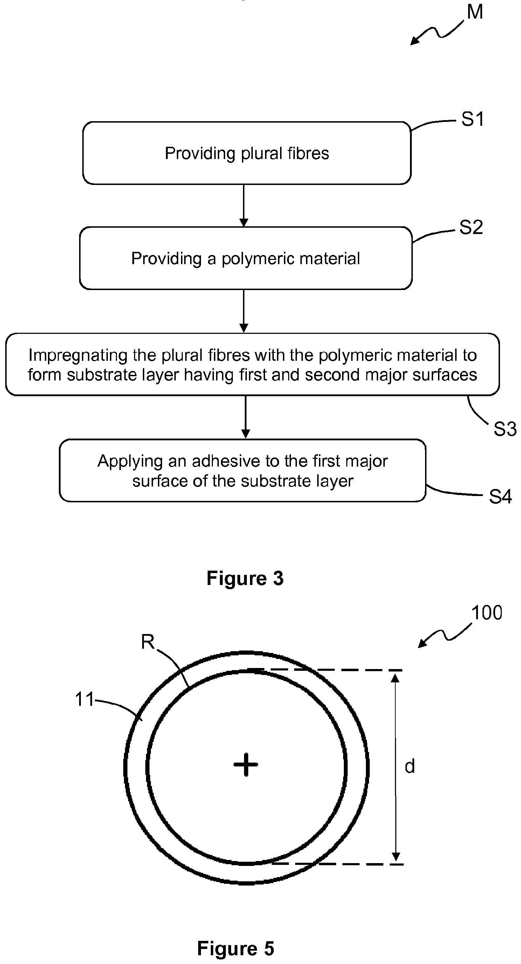

Referring now to Figure 3, there is shown a flow diagram showing a method M of forming sheet material 1 according to an embodiment of the invention.

The method M comprises a first step S1 of providing plural fibres. In this embodiment, the plural fibres comprise a fibre bundle of coaligned carbon fibres. In embodiments, however, the plural fibres may not be coaligned but may instead be non-aligned, for example may be matted or woven or otherwise intermeshed and/or at least partially randomly oriented relative to one another. Additionally or alternatively, in embodiments the plural fibres may comprise glass fibres, comingled fibres and/or metallic fibres.

In this embodiment, the fibre bundle of coaligned carbon fibres is at least partially spread prior to impregnation in the third step S3 (which will be described in greater detail below). In embodiments, however, the fibre bundle may not be at least partially spread. In this embodiment, the plural fibres are provided from about a roll. In embodiments, however, the plural fibres may be provided in any suitable manner. The plural fibres may be drawn through apparatus for use in the method, for example from a take-up or storage roll (about which formed sheet material 1 may be stored, as will be described in greater detail below).

Where the plural fibres are not provided in a coaligned arrangement a step may be provided of aligning (e.g. at least partially) the plural fibres. Coaligning of the fibres may be achieved by any suitable method as is well known by one skilled in the art and will not be described further herein.

In a second step S2 a polymeric material is provided, which is a polyamide, in this embodiment. In embodiments, additionally or alternatively the polymeric material may comprise one or more of the other polymeric materials described herein, or the like. In embodiments, the polymeric material may be provided in an at least partially non-liquid form, for example as a semi-liquid, solid, powder or the like (or as a mixture of one or more of these states with or without a liquid).

The plural fibres are impregnated with the polymeric material, in a third step S3 of the method M, to thereby form a substrate layer 2 having first and second major surfaces 2a, 2b. The impregnation may be achieved using melt impregnation, e.g. via pultrusion.

Where the polymeric material is provided in the second step S2 in an at least partially non-liquid form the third step S3 may comprise forming the polymeric material into a liquid. For example, the polymeric material may be introduced into a heating chamber and may then be heated until it has reached liquid form. Additionally or alternatively, the polymeric material may be introduced into an extrusion chamber and may be extruded (for example by a screw extruder) until the polymeric material has become liquid. In embodiments, the extrusion chamber may be at least partially heated.

The third step S3 comprises passing (e.g. running) the plural fibres though the liquid polymeric material, in this embodiment. The liquid polymeric material is retained in an impregnation chamber and the plural fibres are passed through the liquid polymeric material therein, in this embodiment. For example, the plural fibres are passed about one or more reels disposed in (e.g. under the surface of) the liquid polymeric material. In this embodiment the liquid polymeric material is fed into the impregnation chamber in a liquid state. In embodiments, the heating chamber and/or extrusion chamber (where provided) may be fluidly connected to the impregnation chamber, for the flow of liquid polymeric material thereinto. In embodiments, however, the impregnation chamber may comprise (e.g. may be) the heating chamber and/or the extrusion chamber.

Where the liquid polymeric material is heated to achieve a liquid state the method may comprise a step of cooling the impregnated plural fibres. This cooling may occur after the impregnated plural fibres have left the impregnation chamber. Such cooling may be active or passive. For example, cooling may comprise allowing the plural fibres to cool at ambient temperature during their passage from the impregnation chamber. Alternatively, cooling may comprise active cooling, for example directing a relatively cooler stream of fluid (e.g. gas such as air) at or toward the impregnated plural fibres.

In a fourth step S4 an adhesive 3 is applied to the first major surface 2a of the substrate layer 2 formed in the third step S3. In this embodiment, the adhesive 3 is applied as a prefilmed tape.. However, the adhesive 3 may be applied in any suitable manner, for example as a fluid adhesive or as a solid adhesive layer.

In embodiments in which the adhesive is applied as a fluid adhesive, the adhesive may be applied through a liquid coating process. For example, the quantity of adhesive 3 applied to the first major surface 2a may be controlled by use of a doctor blade.. Where the adhesive 3 is applied as a solid adhesive layer it may be pressed against the first major surface 2a of the substrate layer 2 (for example by passing the substrate layer 2 and adhesive layer through the nip between a pair of rollers).

In an optional fifth step (not shown in Figure 3) the thus formed sheet material 1 may be collected about a roll (for example for transport and/or storage). In embodiments, the roll may have a diameter of less than 200, 180, 160, 150, 140, 130, 120, 110, 100, 90, 80, 70, 60, 50 or 40 mm. In an optional sixth step (not shown in Figure 3) the formed sheet material 1 may be cut to desired dimensions (for example a desired length and/or width) and/or to a desired shape. The sixth step (where undertaken) may occur prior to or subsequent to the fourth step S4 and/or the fifth step (where undertaken).

Referring now to Figure 4, there is shown a sheet material 11 according to an alternative embodiment of the invention wherein like features to those shown in the embodiment shown in Figures 1 and 2 are provided with like references preceded by a '1' and will not be described herein further. The sheet material 11 shown in Figure 4 differs from that shown in Figures 1 and 2 in that a release layer 14 is provided to cover the adhesive 13. The release layer 14 may advantageously comprise a paper release layer. In embodiments, however, the release layer 14 may be a plastics release layer. In yet further embodiments, the release layer 14 may comprise a mixture of plastics and paper, for example paper at least partially coated with plastics material. The method of forming the sheet material 11 comprises a step of applying the release layer 14 to cover the adhesive 13. In alternative embodiments, the method of forming the sheet material 11 may comprise a step of applying the release layer 14 to the adhesive 13 prior to application to the sheet material 11. In embodiments, the release layer 14 may be pre-applied to the adhesive 13, and/or may be purchased or otherwise obtained in this format. In these embodiments, the adhesive 13 and release layer 14 may be subsequently applied to the sheet material 11 as an integral object. In some embodiments, the release layer 14 may be fed from a roll (for example about which it may be stored prior to application to cover the adhesive 13). Advantageously, the release layer 14 may mitigate or prevent self-adhesion of the sheet material 11, for example when the sheet material 11 is wound about a roll for storage and/or transport.

Referring now to Figure 5, there is shown a roll (e.g. store) of sheet material 100 comprising a sheet material 11 as shown in Figure 4 stored about a roll R. The roll R has a diameter d of less than 200mm in this embodiment. In embodiments, however, the roll R may have a diameter d of less than 150 mm, say less than 140, 130, 120, 110, 100, 90, 80, 70, 60 or 50 mm.

In use, at least a portion of the sheet material 11 is unrolled from about the roll R (where supplied thereabout). The release layer 14 is then removed from the adhesive 13 and the sheet material 11 is then secured at or to a site using the adhesive 13. For example, the use may be for repairing, reinforcing and/or forming at least a portion of a structure or surface (for example by providing at least part of a layer of a structure or surface).

It will be appreciated by those skilled in the art that several variations to the aforementioned embodiments are envisaged without departing from the scope of the invention. For example, although the sheet material 1, 11 shown in Figures 1, 2 and 4 is depicted as having a length I which is greater (e.g. substantially) than the width w this need not be the case and, instead, the width w and length I may be similar to one another.

The sheet material of Figures 1 and 2 comprises adhesive that is inboard of both edges of the substrate layer. However, the adhesive may be inboard of only one of the edges or of neither of the edges. For example, it may be more efficient to manufacture wide tapes, apply the adhesive, and then cut them down to desired width. In this case, the adhesive would span the full width of the substrate layer.

It will also be appreciated by those skilled in the art that any number of combinations of the aforementioned features and/or those shown in the appended drawings provide clear advantages over the prior art and are therefore within the scope of the invention described herein.

## Claims

1. A sheet material, the sheet material comprising a substrate layer having first and second major surfaces, with an adhesive layer on the first major surface, the substrate layer being formed from plural fibres retained in a polymeric matrix, wherein the sheet material has a thickness of less than 0.40 mm and greater than 0.05mm, wherein the plural fibres are substantially coaligned, and wherein the sheet material has a length and the coaligned plural fibres extend in the direction of the length of the sheet material.

2. A sheet material according to Claim 1, wherein the sheet material has a thickness of less than 0.35, 0.30, 0.25 or 0.2 mm.

3. A sheet material according to Claim 1 or 2, wherein the plural fibres comprise between 25 and 75 w/w% of the substrate layer.

4. A sheet material according to any preceding Claim, wherein the sheet material has a tensile strength of greater than 25 MPa, for example greater than 50, 100, 200, 300, 400, 500, 600, 700, 800, 900, 1000 MPa.

5. A sheet material according to any preceding Claim, wherein the sheet material is in the form of a tape and/or wherein the sheet material has a bend radius of less than or equal to 100 mm.

6. A sheet material according to any preceding Claim, wherein the sheet material has a width of between 10 mm and 300 mm.

7. A sheet material according to any preceding Claim, wherein the fibres comprise one or more of carbon fibres, glass fibres, comingled fibres and metallic fibres and/or wherein the polymeric matrix comprises a thermoplastic polymer and/or a thermosetting polymer and/or wherein the adhesive layer comprises a pressure sensitive and/or moisture sensitive and/or temperature sensitive adhesive.

8. A method of forming a sheet material, the method comprising the steps of:
a) providing substantially coaligned plural fibres;
b) providing a polymeric material;
c) at least partially impregnating the plural fibres with the polymeric material to thereby form a substrate layer comprising the plural fibres retained in a polymeric matrix, the polymeric matrix being formed from the polymeric material, the substrate layer having first and second major surfaces; and
d) applying an adhesive to the first major surface of the substrate layer, thereby providing a sheet material having a thickness of less than 0.40 mm.

9. Method according to Claim 8, wherein the polymeric material is provided in the form of a liquid, a resin, a powder and/or a solid in step b).

10. Method according to either of Claims 8 to 9, wherein the polymeric material is provided in the form of a resin, a powder and/or a solid in step b) and wherein step c) comprises at least partially forming the polymeric material into a liquid, e.g. by heating the polymeric material and optionally wherein step c) comprises solidifying the liquid or semi-liquid polymeric material to form the substrate layer.

11. Method according to any of Claims 8 to 10, comprising a step f) of applying a release layer to cover the adhesive.

12. Use of a sheet material according to any of Claims 1 to 7 or formed according to the method of any of Claims 8 to 11 for repairing, reinforcing and/or forming at least a portion of a structure or surface and optionally comprising unrolling at least a portion of the sheet material from about a roll having a diameter of less than 100 mm and then repairing, reinforcing and/or forming the at least a portion of the structure or surface using some or all of the unrolled at least a portion of the sheet material.

## Patentansprüche

1. Bahnmaterial, wobei das Bahnmaterial eine Substratschicht umfasst, die eine erste und eine zweite Hauptfläche aufweist, mit einer Klebstoffschicht auf der ersten Hauptfläche, wobei die Substratschicht aus mehreren Fasern gebildet ist, die in einer Polymermatrix gehalten werden, wobei das Bahnmaterial eine Dicke von weniger als 0,40 mm und mehr als 0,05 mm aufweist, wobei die mehreren Fasern im Wesentlichen gleichgerichtet sind, und wobei das Bahnmaterial eine Länge aufweist und sich die gleichgerichteten mehreren Fasern in der Richtung der Länge des Bahnmaterials erstrecken.

2. Bahnmaterial nach Anspruch 1, wobei das Bahnmaterial eine Dicke von weniger als 0,35, 0,30, 0,25 oder 0,2 mm aufweist.

3. Bahnmaterial nach Anspruch 1 oder 2, wobei die mehreren Fasern zwischen 25 und 75 Gew.-% der Substratschicht umfassen.

4. Bahnmaterial nach einem vorhergehenden Anspruch, wobei das Bahnmaterial eine Zugfestigkeit von mehr als 25 MPa aufweist, zum Beispiel mehr als 50, 100, 200, 300, 400, 500, 600, 700, 800, 900, 1000 MPa.

5. Bahnmaterial nach einem vorhergehenden Anspruch, wobei das Bahnmaterial in der Form eines Bandes ist und/oder wobei das Bahnmaterial einen Biegeradius von weniger als oder gleich 100 mm aufweist.

6. Bahnmaterial nach einem vorhergehenden Anspruch, wobei das Bahnmaterial eine Breite zwischen 10 mm und 300 mm aufweist.

7. Bahnmaterial nach einem vorhergehenden Anspruch, wobei die Fasern eines oder mehrere von Kohlefasern, Glasfasern, zusammengeschmolzenen Fasern und Metallfasern umfassen und/oder wobei die Polymermatrix ein thermoplastisches Polymer und/oder ein wärmehärtbares Polymer umfasst und/oder wobei die Klebstoffschicht einen druckempfindlichen und/oder feuchtigkeitsempfindlichen und/oder temperaturempfindlichen Klebstoff umfasst.

8. Verfahren zum Bilden eines Bahnmaterials, wobei das Verfahren die folgenden Schritte umfasst:
a) Bereitstellen von im Wesentlichen gleichgerichteten mehreren Fasern;
b) Bereitstellen eines Polymermaterials;
c) zumindest teilweises Imprägnieren der mehreren Fasern mit dem Polymermaterial, um dadurch eine Substratschicht zu bilden, die die mehreren Fasern umfasst, die in einer Polymermatrix gehalten werden, wobei die Polymermatrix aus dem Polymermaterial gebildet ist, wobei die Substratschicht eine erste und eine zweite Hauptfläche aufweist; und
d) Auftragen eines Klebstoffes auf die erste Hauptfläche der Substratschicht, wodurch ein Bahnmaterial bereitgestellt wird, das eine Dicke von weniger als 0,40 mm aufweist.

9. Verfahren nach Anspruch 8, wobei das Polymermaterial in Schritt b) in der Form einer Flüssigkeit, eines Harzes, eines Pulvers und/oder eines Feststoffes bereitgestellt wird.

10. Verfahren nach einem der Ansprüche 8 bis 9, wobei das Polymermaterial in Schritt b) in der Form eines Harzes, eines Pulvers und/oder eines Feststoffes bereitgestellt wird und wobei Schritt c) das zumindest teilweise Bilden des Polymermaterials zu einer Flüssigkeit umfasst, z. B. durch Erhitzen des Polymermaterials, und wobei optional Schritt c) das Verfestigen des flüssigen oder halbflüssigen Polymermaterials umfasst, um die Substratschicht zu bilden.

11. Verfahren nach einem der Ansprüche 8 bis 10, umfassend einen Schritt f) des Aufbringens einer Trennschicht, um den Klebstoff zu bedecken.

12. Verwendung eines Bahnmaterials nach einem der Ansprüche 1 bis 7 oder gebildet nach dem Verfahren nach einem der Ansprüche 8 bis 11 zum Reparieren, Verstärken und/oder Bilden von zumindest einem Abschnitt einer Struktur oder Fläche und optional umfassend das Abrollen von zumindest einem Abschnitt des Bahnmaterials von etwa einer Rolle, die einen Durchmesser von weniger als 100 mm aufweist, und dann Reparieren, Verstärken und/oder Bilden des zumindest einen Abschnittes der Struktur oder Fläche unter Verwendung eines Teils oder des gesamten abgerollten zumindest eines Abschnittes des Bahnmaterials.

## Revendications

1. Matériau en feuille, le matériau en feuille comprenant une couche de substrat possédant des première et deuxième surfaces principales, avec une couche adhésive sur la première surface principale, la couche de substrat étant formée de plusieurs fibres retenues dans une matrice polymère, dans lequel le matériau en feuille possédant une épaisseur inférieure à 0,40 mm et supérieure à 0,05 mm, dans lequel les plusieurs fibres sont sensiblement coalignées, et dans lequel le matériau en feuille possède une longueur et les plusieurs fibres coalignées s'étendent dans la direction de la longueur du matériau en feuille.

2. Matériau en feuille selon la revendication 1, dans lequel le matériau en feuille possède une épaisseur inférieure à 0,35, 0,30, 0,25 ou 0,2 mm.

3. Matériau en feuille selon la revendication 1 ou 2, dans lequel les plusieurs fibres constituent entre 25 et 75 % en p/p de la couche de substrat.

4. Matériau en feuille selon une quelconque revendication précédente, dans lequel le matériau en feuille possède une résistance à la traction supérieure à 25 MPa, par exemple supérieure à 50, 100, 200, 300, 400, 500, 600, 700, 800, 900, 1 000 MPa.

5. Matériau en feuille selon une quelconque revendication précédente, dans lequel le matériau en feuille se présente sous la forme d'une bande et/ou dans lequel le matériau en feuille possède un rayon de courbure inférieur ou égal à 100 mm.

6. Matériau en feuille selon une quelconque revendication précédente, dans lequel le matériau en feuille possède une largeur comprise entre 10 mm et 300 mm.

7. Matériau en feuille selon une quelconque revendication précédente, dans lequel les fibres comprennent une ou plusieurs fibres parmi des fibres de carbone, des fibres de verre, des fibres entremêlées et des fibres métalliques et/ou dans lequel la matrice polymère comprend un polymère thermoplastique et/ou un polymère thermodurcissable et/ou dans lequel la couche adhésive comprend un adhésif sensible à la pression et/ou sensible à l'humidité et/ou sensible à la température.

8. Procédé de formation d'un matériau en feuille, le procédé comprenant les étapes de :
a) fourniture de plusieurs fibres sensiblement coalignées ;
b) fourniture d'un matériau polymère ;
c) imprégnation au moins partielle des plusieurs fibres avec le matériau polymère pour former ainsi une couche de substrat comprenant les plusieurs fibres retenues dans une matrice polymère, la matrice polymère étant formée du matériau polymère, la couche de substrat comportant des première et deuxième surfaces principales ; et
d) application d'un adhésif sur la première surface principale de la couche de substrat, fournissant ainsi un matériau en feuille possédant une épaisseur inférieure à 0,40 mm.

9. Procédé selon la revendication 8, dans lequel le matériau polymère est fourni sous la forme d'un liquide, d'une résine, d'une poudre et/ou d'un solide à l'étape b).

10. Procédé selon l'une ou l'autre des revendications 8 à 9, dans lequel le matériau polymère est fourni sous la forme d'une résine, d'une poudre et/ou d'un solide à l'étape b) et dans lequel l'étape c) comprend la formation au moins partielle du matériau polymère en un liquide, par exemple en chauffant le matériau polymère et éventuellement dans lequel l'étape c) comprend la solidification du matériau polymère liquide ou semi-liquide pour former la couche de substrat.

11. Procédé selon l'une quelconque des revendications 8 à 10, comprenant une étape f) d'application d'une couche de libération pour recouvrir l'adhésif.

12. Utilisation d'un matériau en feuille selon l'une quelconque des revendications 1 à 7 ou formé selon le procédé selon l'une quelconque des revendications 8 à 11 pour réparer, renforcer et/ou former au moins une partie d'une structure ou d'une surface et comprenant éventuellement le déroulement d'au moins une partie du matériau en feuille à partir d'environ un rouleau possédant un diamètre inférieur à 100 mm, puis la réparation, le renforcement et/ou la formation de l'au moins une partie de la structure ou de la surface à l'aide d'une partie ou de la totalité de l'au moins une partie déroulée du matériau en feuille.
